Europäisches Patentamt

European Patent Office

Office européen des brevets

(19)

(11) Publication number: **0 060 100**

**A1**

(12) **EUROPEAN PATENT APPLICATION**

(21) Application number: **82301123.4**

(22) Date of filing: **05.03.82**

(51) Int. Cl.³: **A 01 K 15/00**

(30) Priority: **07.03.81 GB 8107239**

(43) Date of publication of application:
**15.09.82 Bulletin 82/37**

(84) Designated Contracting States:
**BE DE FR NL**

(71) Applicant: **Thompson, Brian John**
**4 Kimberley Close Church Hill**
**Redditch Worcestershire(GB)**

(72) Inventor: **Thompson, Brian John**
**4 Kimberley Close Church Hill**
**Redditch Worcestershire(GB)**

(74) Representative: **Russell, Paul Sidney et al,**
**Barker, Brettell & Duncan 138 Hagley Road Edgbaston**
**Birmingham B16 9PW(GB)**

(54) **Animal restrainer.**

(57) A rigid dog lead comprises a tubular rigid shaft (10) interconnecting a hand grip (12) and operable fastening means (14), by which the lead can be secured to a dog's collar. A finger trigger (26) adjacent the hand grip enables the fastening means to be operated by the same hand of a handler as is on the hand grip. An operating rod (20), to which the trigger is secured, extends along the shaft to close an openable loop of the fastening means, the rod being urged by a spring (24) to close the loop except when the trigger is operated.

EP 0 060 100 A1

1

<u>ANIMAL RESTRAINER</u>

This invention is concerned with an animal restraining device and its use for controlling walking animals.

Conventionally a flexible lead is used by a handler to control a dog when walking, the lead being secured to a collar on the dog's neck by means of some form of manually releasable clip. Similarly it is well known in agriculture for a bull to be led by means of a lead which is secured to a ring on the bull's nose.

Whilst a flexible lead enables a handler to prevent an animal running off, it otherwise affords little control of the animal. For example, the animal can still jump up and is free to change direction suddenly.

It is an object of the present invention to provide a device suitable for use in controlling walking animals which enables better control to be kept of the animal than is afforded by a flexible lead.

In accordance with the invention, a device is characterised in that it comprises a substantially rigid shaft which interconnects a hand grip and operable fastening means enabling the device to be readily secured to, or released from, connecting means secured to the animal, the device comprising operating means whereby the fastening means can be operated by a handler by means of the same hand as is on the hand grip.

The fastening means preferably provides an openable, at least substantially closed, loop. Most preferably it comprises a hooked portion, whereby an animal will be restrained when in use the device is in tension, and a resiliently mounted loop-closing portion which can be displaced to open the loop.

The loop-closing portion may be provided by an end portion of an operating rod which extends along the bore of a tube providing the shaft and is resiliently urged along the tube towards a position in which the loop is closed. The operating rod preferably extends along the shaft to a position adjacent the hand grip where a finger-operable trigger is provided to enable a handler to move the rod longitudinally to open the loop.

It has been found that a device according to the invention can enable very close control of an animal to be maintained. Such close control may be particularly valuable to dog handlers involved in, for example, policing or other security work, and to farmers in the handling of bulls. In certain work, for example police work, the ability of a handler to release an animal virtually instantaneously, using the same hand as is on the hand grip and leaving the other hand free, could be particularly valuable.

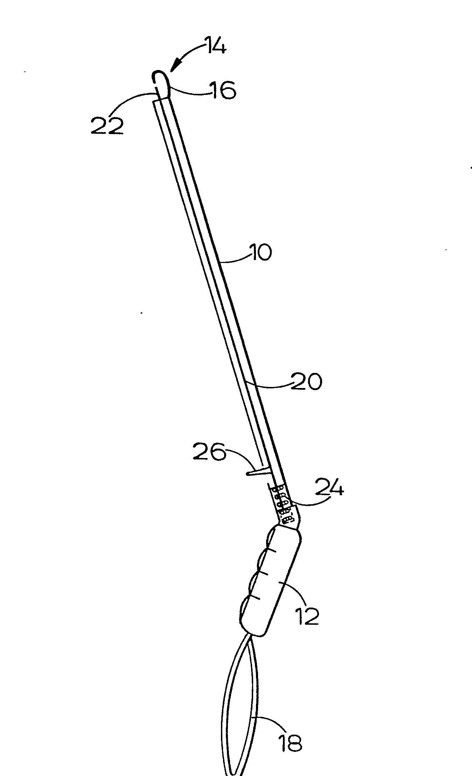

There now follows a detailed description, to be read with reference to the accompanying drawing, of an animal restraining device which illustrates the invention by way of example.

The accompanying drawing illustrates the general construction of the device.

The device comprises an elongate shaft 10 which interconnects a hand grip portion 12 of the device and fastening means 14 providing an openable closed loop. The shaft 10 comprises a substantially rigid metal tube which at one end carries a hooked portion 16 of the fastening means. At its opposite end it carries the hand grip 12 which is of a moulded plastics material and is shaped to provide a secure hand-hold; for comfort and convenience in use, the hand grip projects from the end of the shaft at an angle of between 30° and 50° to the shaft axis. A safety strap 18, in the form of a loop to be put around the wrist of a handler using the device, is secured to the outer end of the hand grip, remote from the shaft 10.

The device comprises an operating rod 20 within the tubular shaft 10. An end portion 22 of the rod provides a loop-closing portion of the fastening means 14. At an opposite end portion of the rod, adjacent the hand grip 12, a washer on the rod engages a compression spring 24 which resiliently urges the rod along the shaft towards a position in which it engages the free end of the hooked portion 16. A finger trigger 26 secured to the rod 20, projects through a slot in the shaft 10 at a position adjacent the hand grip 12.

The shaft 10 may be of any length to suit the circumstances in which the device is to be used.

The operating means of the device is so arranged that the fastening means can be operated manually by the same hand of a handler as is on the hand grip, the finger trigger being comfortably within the reach of a finger of that hand.

In use of the device, a loop secured to an animal, for example a ring on a dog's collar, is coupled to the fastening means 14; the trigger 26 is pulled, towards the hand grip 12, to displace the end portion 22 of the rod from the free end of the hooked portion 16 to open the closed loop of the fastening means and allow coup-

4

ling, subsequent release of the trigger allowing a return movement of the rod, under the action of the spring 24, to re-close the loop. The animal can be kept under very close control but can be released immediately at any time. The arrangement of the hooked portion 16 of the fastening means determines that when the device is in tension, the loop secured to the animal will be retained by the hook even if the trigger is accidentally pulled; to release the animal in that situation, it would be necessary to push the device slightly towards the animal (with the trigger pulled) to get the loop clear of the hook and uncoupled from the device.

## CLAIMS

1.    A device suitable for use in controlling walking animals characterised in that it comprises a substantially rigid shaft (10) which interconnects a hand grip (12) and operable fastening means (14) enabling the device to be readily secured to, or released from, connecting means secured to the animal, the device comprising operating means (20, 24, 26) whereby the fastening means can be operated by a handler by means of the same hand as is on the hand grip.

2.    A device according to claim 1 characterised in that the fastening means provides an openable loop.

3.    A device according to claim 2 characterised in that the fastening means comprises a hooked portion (16), whereby an animal will be restrained when in use the device is in tension, and a resiliently mounted loop-closing portion (22) which can be displaced to open the loop.

4.    A device according to claim 3 characterised in that the loop-closing portion (22) is provided by an end portion of an operating rod (20) which extends from a position adjacent the hand grip (12) and is resiliently urged longitudinally to close the loop.

5.    A device according to claim 4 characterised in that the operating means comprises a finger-operable trigger (26) positioned adjacent the hand grip (12) to enable a handler to move the rod (20) longitudinally to open the loop.

6.    A device according to claim 1 characterised in that the operating means comprises an operating rod (20)

6

which extends from the fastening means (14) to a position adjacent the hand grip (12) where a finger-operable trigger (26) is connected to the rod to enable a handler to move the rod longitudinally to operate the fastening means.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | GB - A - 624 448 (KING) <br> * whole document * | 1-6 | A 01 K 15/00 |
| X | US - A - 1 467 452 (RASMUSSEN) <br> * whole document * | 1-4 | |
| X | US - A - 3 910 234 (HENSON) <br> * column 1, lines 47-62; column 2, line 29 - column 3, line 50 * | 1-5 | |
| X | CH - A - 141 241 (CORPATAUX) <br> * whole document * | 1-2, 5-6 | **TECHNICAL FIELDS SEARCHED (Int. Cl. ³)** <br><br> A 01 K |
| X | US - A - 2 807 495 (PILLSTROM) <br> * whole document * | 1-6 | |

The present search report has been drawn up for all claims

| Place of search | Date of completion of the search | Examiner |
|---|---|---|
| The Hague | 15.06.1982 | CRUCHTEN |